# EUROPEAN PATENT APPLICATION

(11) **EP 1 734 464 A1**
(43) Date of publication of application: **20.12.2006**
(21) Application number: 04724731.7
(22) Date of filing: 31.03.2004
(51) Int. Cl.: G06Q 10/00

(54) **WORK FLOW MANAGING SYSTEM**

(71) Applicant: MITSUBISHI DENKI KABUSHIKI KAISHA, Chiyoda-ku Tokyo 100-8310 (JP)
(72) Inventor: TAKASUGI, H., Mitsubishi Denki K.K., Chiyoda-ku, Tokyo 100-8310 (JP); OKAWA, T., Mitsubishi Denki K.K., Chiyoda-ku, Tokyo 100-8310 (JP); OKAZAKI, T., Mitsubishi Denki K.K., Chiyoda-ku, Tokyo 100-8310 (JP)
(74) Representative: Nicholls, Michael John
(86) International application number: PCT/JP2004/004583
(87) International publication number: WO 2005/103971

(57) **Abstract**

A workflow-management apparatus includes a print-of-a-seal form defining unit 21 for receiving registration of form information specifying a form of a print of a seal and for receiving a change of the form information, and a print-of-a-seal image creating unit 26 for creating a print-of-a-seal image according to form information registered in the print-of-a-seal form defining unit 21. The workflow-management apparatus can add a print-of-a-seal image to a circulating electronic document.

## Description

### Field of the Invention

The present invention relates to a workflow management apparatus that can add the print of a seal to an approved circulating electronic document.

### Background of the Invention

A prior art workflow management apparatus is provided with a seal information table used for managing image data about images of seals, and, when a user approves a circulating electronic document, acquires image data about an image of the user's seal from the seal information table, and combines the user's name etc. with the image data.

The prior art workflow management apparatus then adds the image data combined with the user's name etc. to the approved electronic document (see patent reference 1, for example).
[Patent reference 1] Japanese patent application publication No. 8-241,355 (see paragraphs [0019] to [0031] and Fig. 1)

A problem with the prior art workflow management apparatus constructed as mentioned above is that while the prior art workflow management apparatus can add image data about an image of a seal to a circulating electronic document which has been approved if the image data is registered in a seal information table in advance, the prior art workflow management apparatus cannot change image data about images of seals which are already registered into the seal information table because it is generally difficult for the prior art workflow management apparatus to change the image data itself.

The present invention is made in order to solve the above-mentioned problem, and it is therefore an object of the present invention to provide a workflow management apparatus that can add a print-of-a-seal image to a circulating electronic document, and can easily change any print-of-a-seal image to be added to an electronic document as needed.

### Disclosure of the Invention

In accordance with the present invention, there is provided a workflow management apparatus including a form information registration means for receiving registration of form information specifying a form of a print of a seal and for receiving a change of the form information, and a print-of-a-seal image creating means for creating a print-of-a-seal image according to form information registered into the form information registration means, the workflow management apparatus adding the print-of-a-seal image created by the print-of-a-seal image creating means to a circulating electronic document which has been approved.

Therefore, the present invention offers an advantage of being able to easily change a print-of-a-seal image to be added to an electronic document as needed as well as being able to add a print-of-a-seal image to a circulating electronic document.

### Brief Description of the Figures

Fig. 1 is a block diagram showing a workflow management apparatus according to embodiment 1 of the present invention;
Fig. 2 is a flow chart showing processing performed by a print-of-a-seal processing unit of the workflow management apparatus according to embodiment 1 of the present invention;
Fig. 3 is a diagram showing workflow information;
Fig. 4 is a diagram showing a status management table;
Fig. 5 is a diagram showing the status management table;
Fig. 6 is a diagram showing the status management table;
Fig. 7 is a diagram for explaining text information contained in form information;
Fig. 8 is a diagram for explaining text information contained in the form information;
Fig. 9 is diagram for explaining text information contained in the form information;
Fig. 10 is a block diagram showing a workflow management apparatus according to embodiment 2 of the present invention;
Fig. 11 is a diagram showing a print-of-a-seal image in which attributes of a person who has approved an electronic document are contained;
Fig. 12 is a diagram showing a print-of-a-seal image in which the date on which an electronic document was approved is contained;
Fig. 13 is a block diagram showing a workflow management apparatus according to embodiment 7 of the present invention;
Fig. 14 is a block diagram showing a workflow management apparatus according to embodiment 8 of the present invention; and
Fig. 15 is a block diagram showing a workflow management apparatus according to embodiment 9 of the present invention.

### Preferred Embodiments of the Invention

Hereafter, in order to explain this invention in greater detail, the preferred embodiments of the present invention will be described with reference to the accompanying drawings. Embodiment 1.

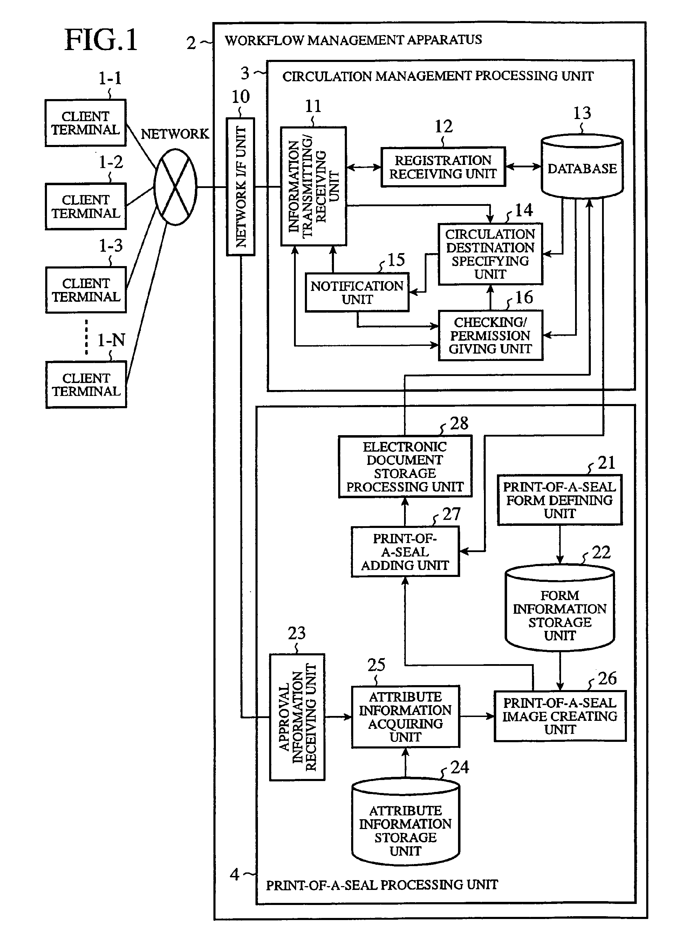

Fig. 1 is a block diagram showing a workflow management apparatus according to embodiment 1 of the present invention. In the figure, client terminals 1-1 to 1-N are terminals, such as personal computers and mobile PCs, connected with the workflow management apparatus 2 via a network, such as a LAN and the Internet. A client can use one of the client terminals, when the client registers an electronic document into the workflow management apparatus 2 or when checking and approving a circulating electronic document.

The workflow management apparatus 2 is provided with a circulation management processing unit 3 for managing circulation of electronic documents, and a print-of-a-seal processing unit 4 for adding a print-of-a-seal image to an approved electronic document.

A network I/F unit 10 has a connecting function of connecting with the network. An information transmitting/receiving unit 11 of the circulation management processing unit 3 is provided with a data transmitting/receiving unit for transmitting and receiving various types of information to and from the client terminals 1-1 to 1-N.

A registration receiving unit 12 of the circulation management processing unit 3 is comprised of an information processing unit, such as a CPU. When receiving a request for registration of an electronic document from, for example, the client terminal 1-1 via the network I/F unit 10, the information transmitting/receiving unit 11 refers to an ID of a client who desires to register the electronic document, the ID being contained in the registration request, and then determines whether the client has the authority to register the electronic document into the workflow management apparatus. Then, only when the client who desires to register the electronic document has the authority to register the electronic document, the information transmitting/receiving unit 11 receives the request for the registration of the electronic document and workflow information, and stores the electronic document and the workflow information in a database 13.

A circulation destination specifying unit 14 of the circulation management processing unit 3 is comprised of the information processing apparatus, such as a CPU, for managing a circulation status of each of electronic documents stored in the database 13, and specifies the next destination to which each of the electronic documents is to be circulated the next time with reference to corresponding workflow information stored in the database 13. A notification unit 15 of the circulation management processing unit 3 transmits a notification of circulation of an electronic document stored in the database to the next destination's client terminal specified by the circulation destination specifying unit 14.

A checking/permission giving unit 16 of the circulation management processing unit 3 is comprised of the information processing apparatus, such as a CPU, and has a function of, when the information transmitting/receiving unit 11 receives a request for circulation of an electronic document from the next destination's client terminal to which the notification of circulation is transmitted by the notification unit 15, permitting the next client to check the electronic document stored in the database 13.

A print-of-a-seal form defining unit 21 of the print-of-a-seal processing unit 4 is provided with input devices, such as a keyboard and a mouse, and a display, and has a function of receiving registration of form information specifying a form of the print of a seal and for receiving a change of form information. A form information storage unit 22 of the print-of-a-seal processing unit 4 is a storage medium, such as a hard disk or a memory, for storing the form information received by the print-of-a-seal form defining unit 21.

Form information registration means is comprised of the print-of-a-seal form defining unit 21 and the form information storage unit 22.

An approval information receiving unit 23 of the print-of-a-seal processing unit 4 is provided with a data receiver for receiving approval information about the approval of a circulating electronic document from, for example, the client terminal 1-1 via the network I/F unit 10. Instead of receiving approval information about the approval of a circulating electronic document from, for example, the client terminal 1-1 via the network I/F unit 10, the approval information receiving unit 23 can receive the approval information about the approval of a circulating electronic document from, for example, the client terminal 1-1 via the information transmitting/receiving unit 11 of the circulation management processing unit 3.

An attribute information storage unit 24 of the print-of-a-seal processing unit 4 is a storage medium, such as a hard disk or a memory, for pre-storing attribute information about attributes of each client (e.g., each client's organization to which each client belongs, each client's job title, each client's name, each client's abbreviated name, etc.), which uses one of the client terminals 1-1 to 1-N. When the approval information receiving unit 23 receives approval information, an attribute information acquiring unit 25 of the print-of-a-seal processing unit 4 uses a client ID contained in the approval information, as a key, so as to acquire the attribute information about attributes of a corresponding client which is the person who has approved the circulating electronic document from the attribute information storage unit 24.

Attribute information acquiring means is comprised of the approval information receiving unit 23, the attribute information storage unit 24, and the attribute information acquiring unit 25.

A print-of-a-seal image creating unit 26 of the print-of-a-seal processing unit 4 is comprised of the information processing apparatus, such as a CPU, and selects form information corresponding to the attribute information acquired by the attribute information acquiring unit 25 from various types of form information stored in the form information storage unit 22, and creates a print-of-a-seal image according to the selected form information. The print-of-a-seal image creating unit 26 constitutes print-of-a-seal image creating means.

A print-of-a-seal adding unit 27 of the print-of-a-seal processing unit 4 is comprised of the information processing apparatus, such as a CPU, and adds the print-of-a-seal image created by the print-of-a-seal image creating unit 26 to the circulating electronic document. The print-of-a-seal adding unit 27 constitutes print-of-a-seal adding means.

An electronic document storage processing unit 28 of the print-of-a-seal processing unit 4 is comprised of the information processing apparatus, such as a CPU, and stores the circulating electronic document with to which the print-of-a-seal image is added by the print-of-a-seal adding unit 27 in the database 13.

In accordance with this embodiment, each component of the circulation management processing unit 3 and the print-of-a-seal processing unit 4 can be comprised of special-purpose hardware, as previously mentioned. As an alternative, the workflow management apparatus 2 can be comprised of a computer, and programs in which instructions for performing processes, which are performed by all the components of the circulation management processing unit 3 and the print-of-a-seal processing unit 4, are described can be stored so that a CPU of the computer can execute the programs.

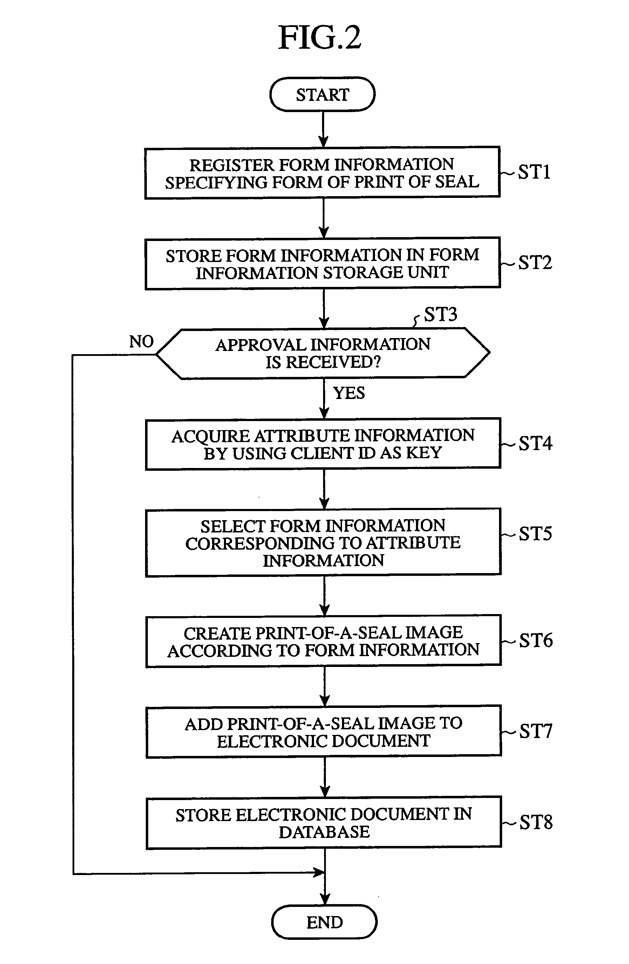

Fig. 2 is a flow chart showing processes performed by the print-of-a-seal processing unit 4 of the workflow management apparatus according to embodiment 1 of the present invention.

Next, the operation of the workflow management apparatus in accordance with embodiment 1 of the present invention will be explained.

First, processing performed by the circulation management processing unit 3 of the workflow management apparatus 2 will be explained briefly.

For example, when a client which uses the client terminal 1-1 desires circulation of an electronic document, he or she operates the client terminal 1-1 so as to make the client terminal 1-1 transmit a request for registration of the electronic document including the client's ID to the workflow management apparatus 2.

When the information transmitting/receiving unit 11 receives the request for the registration of the electronic document from the client terminal 1-1 via the network I/F unit 10, the registration receiving unit 12 of the workflow management apparatus 2 determines whether the client which desires the registration of the electronic document has the authority to register the electronic document with reference to the client's ID contained in the registration request. For example, the registration receiving unit 12 checks a company, place of duty, or the like to which the client who desires to register the electronic document belongs with reference to the client's ID, and, when the client belongs to a company, place of duty, or the like which is allowed to use the workflow management apparatus 2, determines that the client who desires to register the electronic document has the authority to register the electronic document into the workflow management apparatus 2.

When determining that the client which desires to register the electronic document doesn't have the authority to register the electronic document into the workflow management apparatus, the registration receiving unit 12 transmits a message indicating rejection of the registration of the electronic document to the client terminal 1-1 via the information transmitting/receiving unit 11 and the network I/F unit 10.

On the other hand, when determining that the client which desires to register the electronic document has the authority to register the electronic document into the workflow management apparatus, the registration receiving unit 12 transmits a message indicating acceptance of the registration of the electronic document to be circulated to the client terminal 1-1 via the information transmitting/receiving unit 11 and the network I/F unit 10.

As a result, when the client which desires to register the electronic document operates the client terminal 1-1 so as to make the client terminal 1-1 transmit the electronic document to be circulated and workflow information to the workflow management apparatus 2, the registration receiving unit 12 stores the electronic document to be circulated and workflow information which are received by the information transmitting/receiving unit 11 in the database 13.

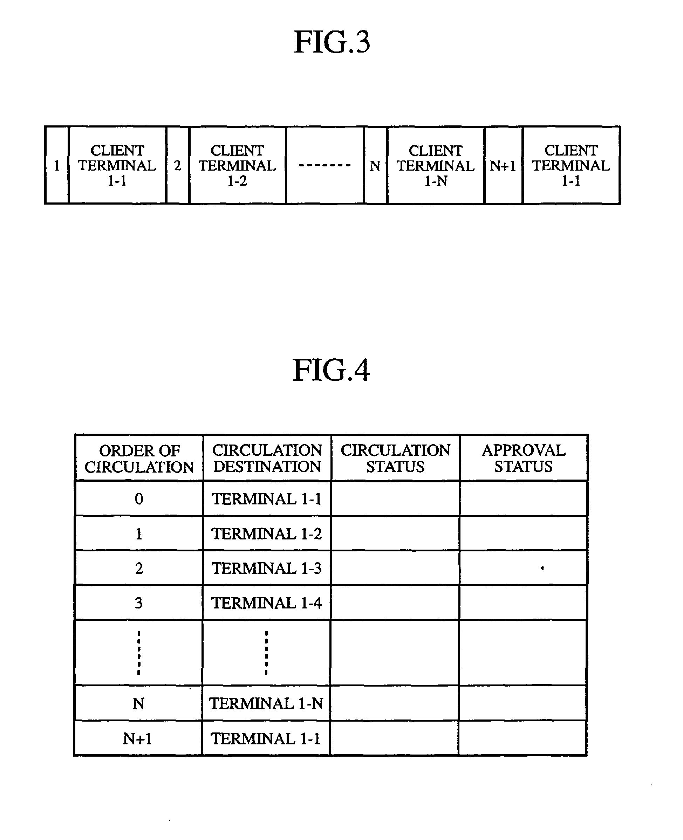

The workflow information is information indicating the order of circulation of the electronic document to be circulated, as shown in Fig. 3. In the example of Fig. 3, the workflow information indicates that the electronic document is to be circulated to the client terminals 1-1 to 1-N in the order of the client terminal 1-1 -> the client terminal 1-2 -> the client terminal 1-3 ->...-> the client terminal 1-N -> the client terminal 1-1.

The circulation of the electronic document can be forked into branches, instead of being done in the above-mentioned order in which the electronic document is to be circulated sequentially to the plurality of client terminals.

When the registration receiving unit 12 thus receives the registration of the electronic document to be circulated, as mentioned, the circulation destination specifying unit 14 of the workflow-management apparatus 2 creates a status management table indicating the order of circulation and the circulation destinations to which the electronic document is to be circulated, and the circulation status and the approval status of the electronic document with reference to the workflow information about the electronic document, and stores the status management table in the database 13 (see Fig. 4).

After creating and storing the status management table in the database 13, the circulation destination specifying unit 14 specifies the first circulation destination to which the electronic document is to be circulated for the first time with reference to the status management table. In this example, the circulation destination specifying unit 14 determines that the client of the client terminal 1-2 is the first circulation destination.

When the circulation destination specifying unit 14 specifies the first circulation destination, the notification unit 15 of the workflow management apparatus 2 transmits a notification of the circulation of the electronic document, via the information transmitting/receiving unit 11 and the network I/F unit 10, to the circulation destination's client terminal 1-2,

As a result, when the client using the client terminal 1-2 recognizes that the electronic document is to be circulated thereto, he or she operates the client terminal 1-2 so as to transmit a request for the circulation of the electronic document to the workflow management apparatus 2. The information transmitting/receiving unit 11 of the workflow management apparatus 2 then receives the circulation request, via the network I/F unit 10, from the client terminal 1-2.

When the information transmitting/receiving unit 11 receives the request for the circulation of the electronic document from the client terminal 1-2 which the first circulation destination uses, the checking/permission giving unit 16 of the workflow-management apparatus 2 permits the client of the client terminal 1-1 to check the electronic document stored in the database 13, and transmits screen information used for displaying the electronic document, via the information transmitting/receiving unit 11 and the network I/F unit 10, to the client terminal 1-2.

As a result, the electronic document is displayed on a display of the client terminal 1-2 so that the client of the client terminal 1-2 can check the contents of the electronic document.

When approving the contents of the electronic document, the client of the client terminal 1-2 can operate the client terminal 1-2 so as to transmit approval information indicating the approval of the contents of the electronic document to the workflow management apparatus 2. In contrast, when refusing to approve the contents of the electronic document, the client of the client terminal 1-2 can operate the client terminal 1-2 so as to transmit refusal information indicating the refusal of the contents of the electronic document to the workflow management apparatus 2.

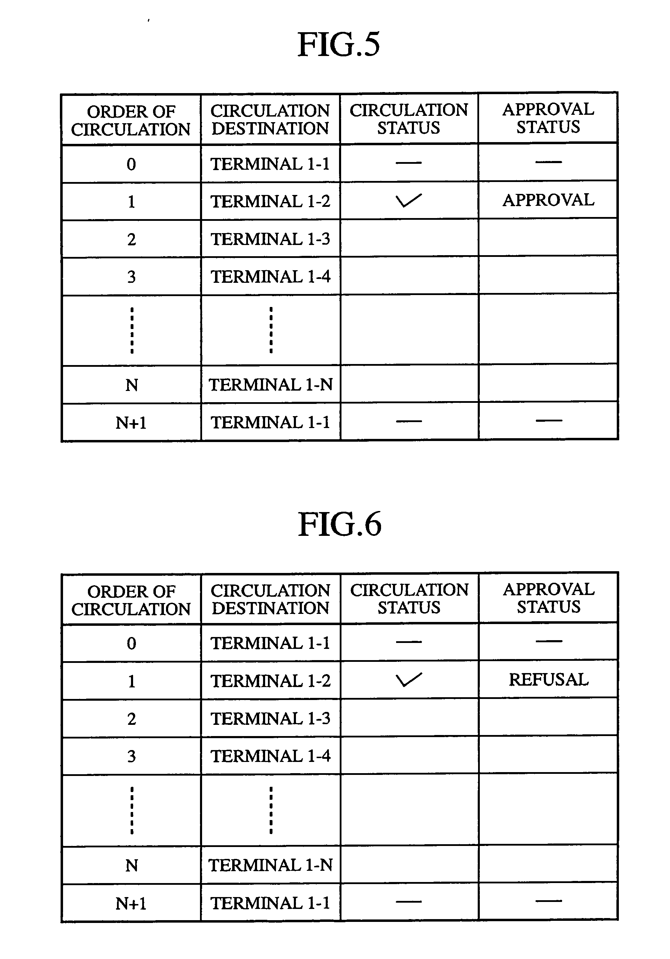

When the information transmitting/receiving unit 11 receives the approval information from the client terminal 1-2 of the first circulation destination, the circulation destination specifying unit 14 of the workflow management apparatus 2 puts "approval" into an approval status field corresponding to the first circulation destination in the status management table while putting a check into a circulation status field corresponding to the first circulation destination in the status management table, as showing in Fig. 5.

On the other hand, when the information transmitting/receiving unit 11 receives the refusal information from the client terminal 1-2 of the first circulation destination, the circulation destination specifying unit 14 of the workflow management apparatus 2 puts "refusal" into the approval status field corresponding to the first circulation destination in the status management table while putting a check into the circulation status field corresponding to the first circulation destination in the status management table, as showing in Fig. 6.

After putting "approval" into the approval status field corresponding to the first circulation destination in the status management table, the circulation destination specifying unit 14 specifies the second circulation destination to which the electronic document is to be circulated for the second time with reference to the status management table. In this example, the circulation destination specifying unit 14 determines that the client which uses the client terminal 1-3 is the second circulation destination to which the electronic document is to be circulated for the second time.

On the other hand, after putting "refusal" into the approval status field corresponding to the first circulation destination in the status management table, the circulation destination specifying unit 14 specifies the 0th circulation destination (i.e., the registrant of the electronic document) with reference to the situation management table. In this example, the circulation destination specifying unit 14 determines that the client of the client terminal 1-1 is the 0th circulation destination.

When the circulation destination specifying unit 14 specifies the second circulation destination to which the electronic document is to be circulated for the second time, the notification unit 15 of the workflow management apparatus 2 transmits a notification of the circulation of the electronic document, via the information transmitting/receiving unit 11 and the network I/F unit 10, to the client terminal 1-3 of the second circulation destination.

As a result, the client of the client terminal 1-3 can recognize that the electronic document is to be circulated thereto, like the first circulation destination to which the electronic document is circulated for the first time.

On the other hand, after specifying the 0th circulation destination (i.e., the registrant of the electronic document), the circulation destination specifying unit 14 transmits a notification of the refusal of the electronic document, via the information transmitting/receiving unit 11 and the network I/F unit 10, to the 0th circulation destination's client terminal 1-1.

As a result, the client of the client terminal 1-1 can recognize that the first circulation destination has refused to approve the circulating electronic document.

Therefore, when the client of the client terminal 1-1 desires to make a correction to the electronic document, he or she can operate the client terminal 1-1 so as to make the client terminal 1-1 transmit a request for correction of the electronic document to the workflow management apparatus 2.

Next, processing performed by the print-of-a-seal processing unit 4 of the workflow management apparatus 2 will be explained.

For example, a manager of the workflow management apparatus 2 can operate the print-of-a-seal form defining unit 21 of the print-of-a-seal processing unit 4 so as to register form information specifying the form of the print of a seal in advance (in step ST1).

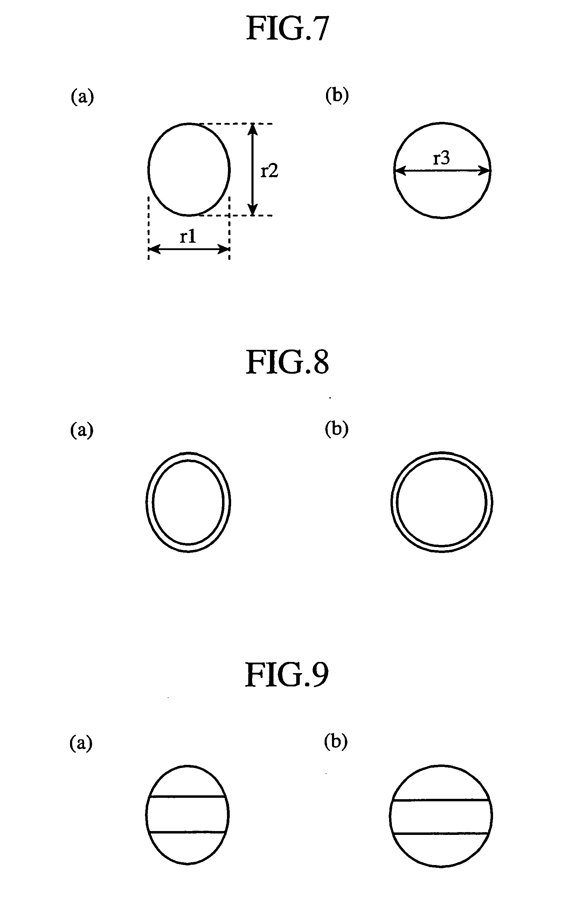

In other words, in a case where the form of the print of a seal to be registered is an ellipse as shown in Fig. 7, the form information specifying the form of the print of a seal has text information showing a minor axis r1 and a major axis r2 of the ellipse. In a case where the form of the print of a seal is a true circle, the form information specifying the form of the print of a seal has text information showing a diameter r3 of the circle.

Furthermore, when the outline of the ellipse or the true circle is a double line as shown in Fig. 8, the form information also has text information showing that the outline is a double line.

In addition, as shown in Fig. 9, when horizontal lines that divide the interior of either the ellipse or the true circle are running in the interior of either the ellipse or the true circle, the form information further has text information showing positions in either the ellipse or the true circle where the horizontal lines are inserted into either the ellipse or the true circle.

When receiving registration of form information specifying the form of the print of a seal, the print-of-a-seal form defining unit 21 of the print-of-a-seal processing unit 4 stores the form information in the form information storage unit 22 (in step ST2). At this time, the print-of-a-seal form defining unit 21 adds and stores attributes (for example, a place of duty, a job title, and a name) associated with the form information when storing the form information in the form information storage unit 22.

When desiring to change a piece of form information stored in the form information storage unit 22, the manager of the workflow management apparatus 2 operates the print-of-a-seal form defining unit 21. For example, when desiring to change the lengths of the minor axis r1 and major axis r2 of the ellipse-shaped print of a seal, what the manager of the workflow management apparatus 2 needs to do is just to change text information showing the minor axis r1 and maj or axis r2 included in corresponding form information stored in the form information storage unit.

As mentioned above, when receiving the approval information indicating the approval of the electronic document, via the network I/F unit 10, from, for example, the client terminal 1-2 to which the electronic document is circulated, the approval information receiving unit 23 of the print-of-a-seal processing unit 4 outputs the approval information to the attribute information acquiring unit 25 (in step ST3).

When receiving the approval information from the approval information receiving unit 23, the attribute information acquiring unit 25 of the print-of-a-seal processing unit 4 uses, as a key, the client ID contained in the approval information so as to acquire the attribute information about the attributes of the client which has approved the electronic document (for example, the client's organization, the client's job title, the client's name, the client's abbreviated name, etc.) from the attribute information storage unit 24 (in step ST4).

When the attribute information acquiring unit 25 acquires the attribute information about the attributes of the client which has approved the electronic document, the print-of-a-seal image creating unit 26 of the print-of-a-seal processing unit 4 selects form information corresponding to the attribute information from the various types of form information stored in the form information storage unit 22 (in step ST5).

For example, when "the client's job title (manager)" is contained in the attribute information about the attributes of the person who has approved the electronic document, the print-of-a-seal image creating unit 26 of the print-of-a-seal processing unit 4 selects form information corresponding to "the client's job title (manager)" from the various types of form information stored in the form information storage unit 22.

When "the client's organization (administrative division) " is contained in the attribute information about the attributes of the person who has approved the electronic document, the print-of-a-seal image creating unit 26 of the print-of-a-seal processing unit 4 selects form information corresponding to "the client's organization (administrative division)" from the various types of form information stored in the form information storage unit 22.

When "the client's job title (manager) and the client's organization (administrative division)" are contained in the attribute information about the attributes of the person who has approved the electronic document, the print-of-a-seal image creating unit 26 of the print-of-a-seal processing unit 4 selects form information having a job title attribute of "manager" and an organization attribute of "administrative division" from the various types of form information stored in the form information storage unit 22.

After selecting a piece of form information, as mentioned above, the print-of-a-seal image creating unit 26 of the print-of-a-seal processing unit 4 creates a print-of-a-seal image according to the form information (in step ST6).

When the form information corresponding to the attribute information about the attributes of the person who has approved the electronic document is not stored in the various types of form information stored in the form information-storage unit 22, the print-of-a-seal image creating unit 26 selects default form information and then creates a print-of-a-seal image according to the default form information.

After the print-of-a-seal image creating unit 26 has created a print-of-a-seal image, the print-of-a-seal adding unit 27 of the print-of-a-seal processing unit 4 adds the print-of-a-seal image to the circulating electronic document (in step ST7).

After the print-of-a-seal adding unit 27 has added the print-of-a-seal image to the circulating electronic document, the electronic document storage processing unit 28 of the print-of-a-seal processing unit 4 stores the electronic document in the database 13 (in step ST8).

As can be seen from the above description, in accordance with this embodiment 1, the workflow management apparatus is so constructed as to receive registration of form information specifying the form of the print of a seal and to add a print-of-a-seal image to a circulating electronic document by using the print-of-a-seal form defining unit 21 for receiving a change of the form information and the print-of-a-seal image creating unit 26 for creating the print-of-a-seal image according to the form information registered into the print-of-a-seal form defining unit 21. Therefore, the present embodiment offers an advantage of being able to easily change a print-of-a-seal image to be added to an electronic document as needed as well as being able to add a print-of-a-seal image to a circulating electronic document.

According to this embodiment 1, the workflow management apparatus is provided with the attribute information acquiring unit 25, responsive to the approval of a circulating electronic document from a client terminal, for acquiring the attribute information about the attributes of the client who has approved the electronic document, and is so constructed as to select form information corresponding to the attribute information about the attributes of the client who has approved the electronic document from all pieces of form information stored in the attribute information storage unit 24, and create a print-of-a-seal image according to the form information. Therefore, the present embodiment offers an advantage of being able to add a print-of-a-seal image associated with a client who has approved a circulating electronic document to the electronic document.

In addition, in accordance with this embodiment 1, a manager can operate a keyboard or the like of the print-of-a-seal form defining unit 21 so as to register form information into the workflow management apparatus, as previously mentioned. As an alternative, a client who desires to register form information can operate the client terminal 1-1, for example, so as to register the form information into the print-of-a-seal form defining unit 21.

Furthermore, in accordance with this embodiment 1, the workflow management apparatus can create a print-of-a-seal image and add it to a circulating electronic document, as previously mentioned. As an alternative, the workflow management apparatus can add image data about an image, such as a bar code or a sign, to a circulating electronic document, for example.

In addition, in accordance with this embodiment 1, the attribute information acquiring unit 25 uses, as a key, a client ID contained in the approval information, and acquires the attribute information about the attributes of a client who has approved an electronic document from the attribute information storage unit 24, as previously mentioned. As an alternative, the attribute information acquiring unit 25 can receive an input of the attributes of the client who has approved the electronic document, or can receive the attributes of the client who has approved the electronic document from a client terminal which the client uses.

### Embodiment 2.

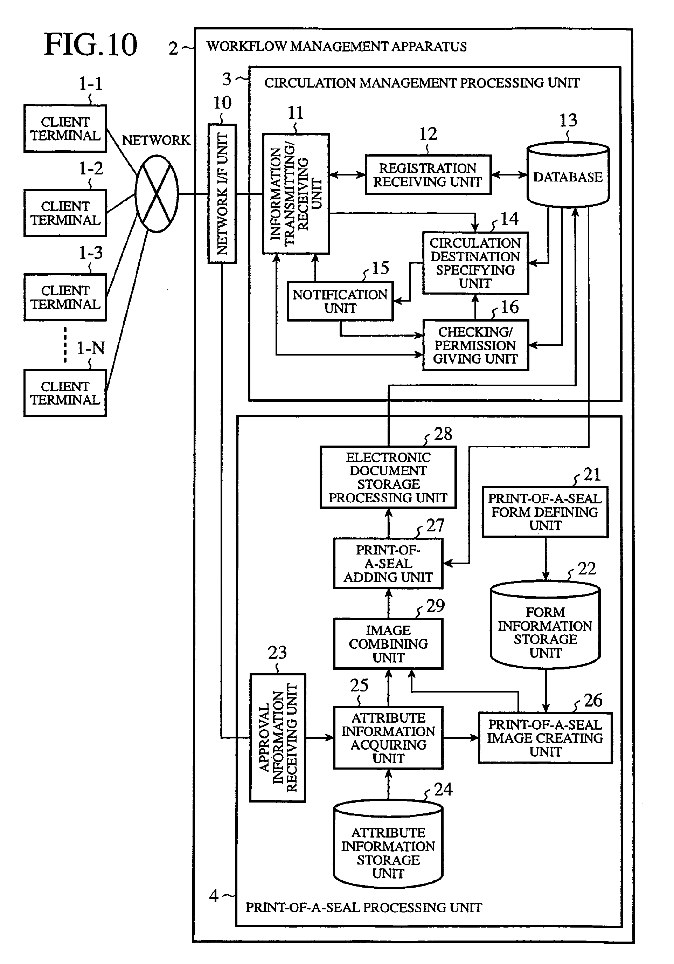

Fig. 10 is a block diagram showing a workflow management apparatus according to embodiment 2 of the present invention. In the figure, the same reference numerals as shown in Fig. 1 denote the same components as those of above-mentioned embodiment 1 or like components, and therefore the explanation of these components will be omitted hereafter.

An image combining unit 29 is comprised of an information processing apparatus, such as a CPU, and forms an attribute image from attribute information acquired by an attribute information acquiring unit 25 and combines the attribute image with a print-of-a-seal image created by a print-of-a-seal image creating unit 26. The image combining unit 29 constitutes print-of-a-seal image creating means.

In accordance with above-mentioned embodiment 1, a print-of-a-seal image created by the print-of-a-seal image creating unit 26 is added to an electronic document, as previously mentioned. In contrast, the image combining unit 29 of this embodiment forms an attribute image from attribute information acquired by the attribute information acquiring unit 25 and combines the attribute image with a print-of-a-seal image created by the print-of-a-seal image creating unit 26.

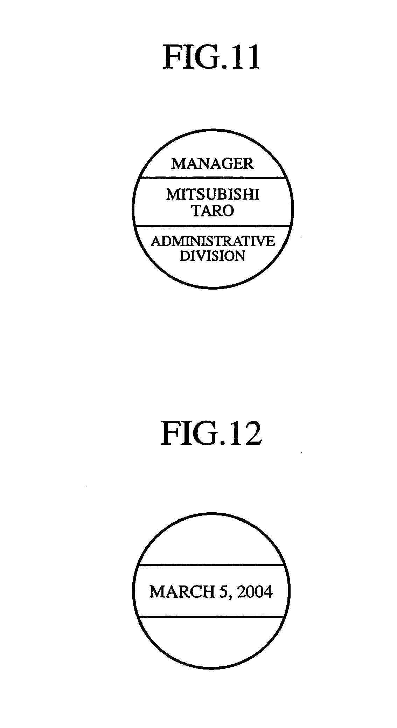

As a result, when "the client's place of duty (administrative division)", "the client's job title (manager)", and "the client's name (Mitsubishi Taro)" are contained in the attribute information about the attributes of a client who has approved the electronic document, as shown in Fig. 11, the workflow management apparatus can add the print-of-a-seal image in which the "administrative division", "manager", and "Mitsubishi Taro" which are the attributes of a client who has approved the electronic document are contained to the electronic document.

### Embodiment 3.

In accordance with above-mentioned embodiment 2, the image combining unit 29 forms an attribute image from attribute information acquired by the attribute information acquiring unit 25 and combines the attribute image with a print-of-a-seal image created by the print-of-a-seal image creating unit 26, as previously mentioned. In contrast, a workflow management apparatus in accordance with this embodiment can form a date on which it received the approval of a circulating electronic document from a client terminal into a date image, and combines the date image with a print-of-a-seal image. Therefore, the present embodiment offers an advantage of being able to add a print-of-a-seal image in which a date on which a circulating electronic document was approved is contained to the electronic document, as shown in Fig. 12.

### Embodiment 4.

In accordance with above-mentioned embodiments 1 to 3, the workflow management apparatus is provided with the attribute information acquiring unit 25 for acquiring attribute information about the attributes of a client who has approved a circulating electronic document and selects form information corresponding to the attribute information from all pieces of form information stored in the form information storage unit 22. In contrast, a workflow management apparatus in accordance with this embodiment can select form information corresponding to either an activity concerning a circulating electronic document or the type of the circulating electronic document from all pieces of form information stored in a form information storage unit 22.

For example, assuming that form information A associated with quoting activity and form information B associated with ordering activity are defined in advance for the client who has approved the circulating electronic document, when the activity concerning the circulating electronic document is a quoting activity, a print-of-a-seal image creating unit 26 of a print-of-a-seal processing unit 4 selects the form information A associated with quoting activity, and then creates a print-of-a-seal image according to the form information A.

Assuming that form information C corresponding to design specifications and form information D corresponding to meeting minutes are defined in advance, when the circulating electronic document is a minute of a meeting, the print-of-a-seal image creating unit 26 of the print-of-a-seal processing unit 4 selects the form information D corresponding to meeting minutes and then creates a print-of-a-seal image according to the form information D.

As can be seen from the above description, in accordance with this embodiment 4, the workflow management apparatus is so constructed as to select form information corresponding to either an activity concerning a circulating electronic document or the type of the circulating electronic document from all pieces of form information stored in the form information storage unit 22. Therefore, the present embodiment offers an advantage of being able to add a print-of-a-seal image corresponding to either an activity concerning the circulating electronic document or the type of the circulating electronic document to the electronic document.

### Embodiment 5.

In accordance with above-mentioned embodiments 1 to 4, when the print-of-a-seal adding unit 27 adds a print-of-a-seal image created by the print-of-a-seal image creating unit 26 to a circulating electronic document, the workflow management apparatus can make the print-of-a-seal adding unit 27 pinpoint a location where the print-of-a-seal image is to be added to the electronic document with reference to the form information of the electronic document, although no mention is made in particular about the location of the print-of-a-seal image.

Concretely, the print-of-a-seal adding unit 27 pinpoints a location where the print-of-a-seal image is to be added to the electronic document as follows.

When a client operates a client terminal 1-1 so as to register an electronic document to be circulated into the workflow management apparatus 2, the client terminal 1-1 transmits form information indicating a location where a print-of-a-seal image is to be added to the electronic document to the workflow management apparatus 2. The form information indicating a location where a print-of-a-seal image is to be added to the electronic document represents coordinates on the electronic document at which the print-of-a-seal image is to be placed.

When an information transmitting/receiving unit 11 receives the form information transmitted thereto from the client terminal 1-1 via a network I/F unit 10, a registration receiving unit 12 of the workflow management apparatus 2 stores the form information in a database 13 as well as the electronic document to be circulated.

When adding a print-of-a-seal image created by the print-of-a-seal image creating unit 26 to the circulating electronic document, the print-of-a-seal adding unit 27 of the workflow-management apparatus 2 pinpoints a location where the print-of-a-seal image is to be added to the electronic document with reference to the form information of the electronic document stored in the database 13 and places the print-of-a-seal image at the pinpointed location.

As can be seen from the above description, in accordance with this embodiment 5, the workflow management apparatus is so constructed that the print-of-a-seal adding unit 27 pinpoints a location where a print-of-a-seal image is to be added to an electronic document with reference to the form information of the electronic document. Therefore, the present embodiment offers an advantage of being able to place the print-of-a-seal image at the location on the circulating electronic document upon which either the registrant of the electronic document or the maker of the form information of the electronic document (when the registrant of the electronic document differs from the maker of the form information) desires to affix his or her seal.

### Embodiment 6.

In accordance with above-mentioned embodiments 1 to 5, the print-of-a-seal adding unit 27 adds a print-of-a-seal image created by the print-of-a-seal image creating unit 26 to a circulating electronic document. In contrast, in accordance with this embodiment, only when a predefined condition for print-of-a-seal addition is satisfied, a workflow management apparatus can add a print-of-a-seal image to a circulating electronic document.

In other words, when a manager or a client of the workflow management apparatus 2 operates a print-of-a-seal form defining unit 21 so as to register form information specifying the form of the print of a seal into the workflow management apparatus 2, the manager or the client is allowed to define a condition for addition of the print of a seal and store the print-of-a-seal addition condition in a form information storage unit 22.

An example of the print-of-a-seal addition condition is that if a client who has approved a corresponding electronic document belongs to a designing division, the addition of a print-of-a-seal image is accepted, whereas if a client who has approved the corresponding electronic document belongs to a development division, the addition a print-of-a-seal image is refused. Another example of the print-of-a-seal addition condition is that if a client who has approved a corresponding electronic document has a job title that is a section chief or greater, the addition of a print-of-a-seal image is accepted, whereas if a client who has approved the corresponding electronic document has a job title that is less than a section chief, the addition a print-of-a-seal image is refused. A further example of the print-of-a-seal addition condition is that if a client approved a corresponding electronic document on or before a predetermined date, the addition of a print-of-a-seal image is accepted, whereas if a client approved the corresponding electronic document after the predetermined date, the addition a print-of-a-seal image is refused.

When adding a print-of-a-seal image created by a print-of-a-seal image creating unit 26 to a circulating electronic document, a print-of-a-seal adding unit 27 of the workflow management apparatus 2 refers to a print-of-a-seal addition condition predefined for the circulating electronic document and stored in the form information storage unit 22, and, only when the print-of-a-seal addition condition is satisfied, adds the print-of-a-seal image to the electronic document.
For example, when the print-of-a-seal addition condition predefined for the circulating electronic document is that if a client who has approved the electronic document has a job title that is a section chief or greater, the addition of a print-of-a-seal image is accepted, whereas if a client who has approved the electronic document has a job title that is less than a section chief, the addition a print-of-a-seal image is refused, the print-of-a-seal adding unit 27 of the workflow management apparatus 2 adds the print-of-a-seal image to the electronic document only if the client who has approved the electronic document has a job title that is a section chief or greater.

As can be seen from the above description, in accordance with this embodiment 6, the workflow management apparatus is so constructed as to add a print-of-a-seal image to a circulating electronic document only when a predefined condition for print-of-a-seal addition is satisfied. Therefore, the present embodiment offers an advantage of being able to add only necessary print-of-a-seal images to a circulating electronic document.

### Embodiment 7.

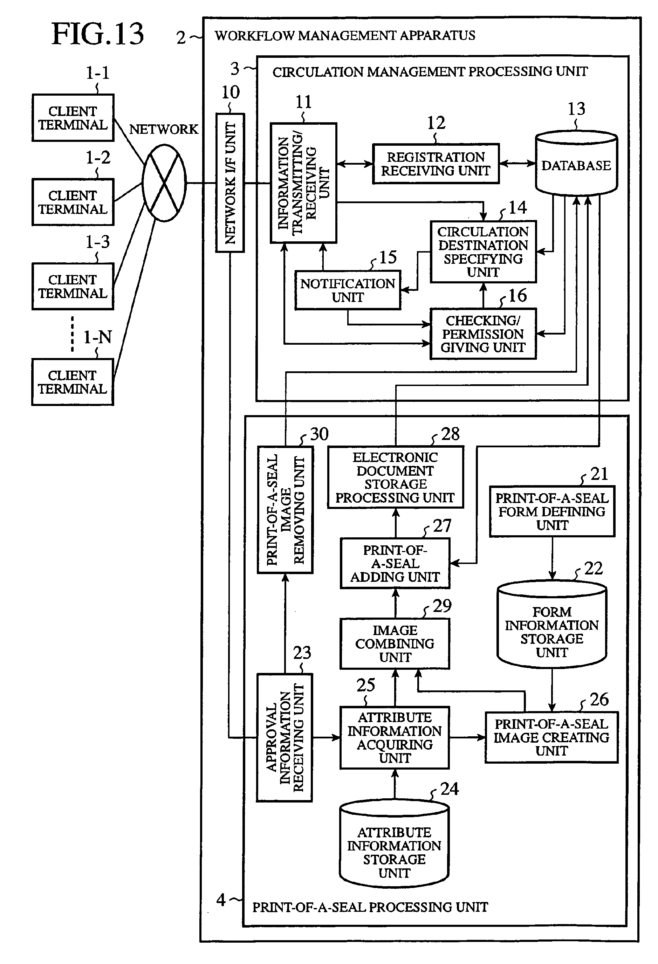

Fig. 13 is a block diagram showing a workflow management apparatus according to embodiment 7 of the present invention. In the figure, the same reference numerals as shown in Fig. 10 denote the same components as those of above-mentioned embodiment 2 or like components, and therefore the explanation of these components will be omitted hereafter.

A print-of-a-seal image removing unit 30 is comprised of an information processing apparatus, such as a CPU, and, when an electronic document to which a print-of-a-seal image has been added by a print-of-a-seal adding unit 27 is sent back to the workflow management apparatus without receiving approval of the electronic document from any other client terminals, removes the print-of-a-seal image added to the electronic document. The print-of-a-seal image removing unit 30 constitutes print-of-a-seal image removing means.

Next, the operation of the workflow management apparatus in accordance with embodiment 7 of the present invention will be explained.

The print-of-a-seal adding unit 27 adds a print-of-a-seal image created by a print-of-a-seal image creating unit 26 to a circulating electronic document, like that according to any one of above-mentioned embodiments 1 to 6. However, there is a possibility that the next circulation destination, the next but one circulation destination or the like then operates his or her client terminal so as to make it transmit refusal information indicating refusal of the electronic document to the workflow management apparatus and sends back the electronic document to the workflow management apparatus after checking the electronic document. In other words, the next circulation destination, the next but one circulation destination or the like may refuse approval of the electronic document. The destination to which the electronic document is sent back can be the registrant of the electronic document or another circulation destination to which the electronic document was circulated immediately before the circulation of the electronic document to the client who has refused approval of the electronic document.

When an approval information receiving unit 23 receives the refusal information transmitted thereto from a client terminal via the network I/F unit 10, the print-of-a-seal image removing unit 30 of the workflow management apparatus 2 carries out a process of removing the print-of-a-seal image already added to the electronic document from the electronic document.

In this case, when two or more print-of-a-seal images are already added to the electronic document, the print-of-a-seal image removing unit 30 of the workflow management apparatus 2 can remove all the print-of-a-seal images from the electronic document. As an alternative, the print-of-a-seal image removing unit 30 of the workflow management apparatus 2 can remove only a print-of-a-seal image associated with a circulation destination to which the electronic document is sent back and print-of-a-seal images associated with circulation destinations to which the electronic document has been circulated after the circulation of the electronic document to the circulation destination to which the electronic document is sent back.

As can be seen from the above description, in accordance with this embodiment 7, the workflow management apparatus is so constructed as to remove print-of-a-seal images which have been added to a circulating electronic document by the print-of-a-seal adding unit 27 when the circulating electronic document is, sent back thereto without receiving approval of the circulating electronic document from any other client terminals. Therefore, the present embodiment offers an advantage of being able to cancel the approval of a circulating electronic document when the circulating electronic document has a defect.

### Embodiment 8.

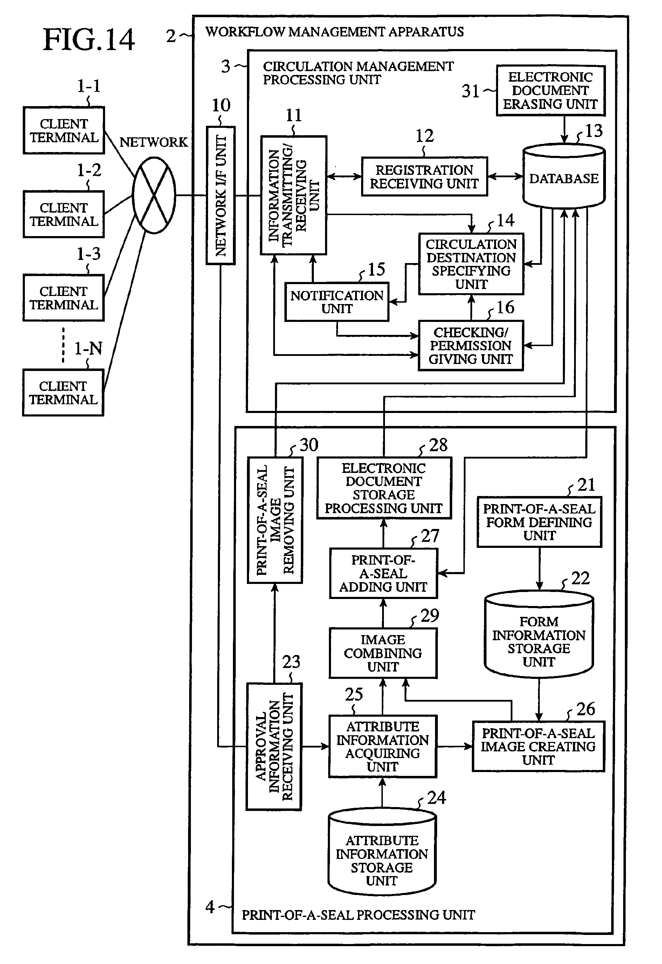

Fig. 14 is a block diagram showing a workflow management apparatus according to embodiment 8 of the present invention. In the figure, the same reference numerals as shown in Fig. 13 denote the same components as those of above-mentioned embodiment 8 or like components, and therefore the explanation of these components will be omitted hereafter.

An electronic document erasing unit 31 is comprised of an information processing apparatus, such as a CPU, and can erase an electronic document to which a print-of-a-seal image is added and which is stored in a database 13. The electronic document erasing unit 31 constitutes electronic document erasing means.

Next, the operation of the workflow management apparatus in accordance with embodiment 8 of the present invention will be explained.

The workflow management apparatus adds a print-of-a-seal image created by a print-of-a-seal image creation unit 26 to a circulating electronic document using a print-of-a-seal adding unit 27, and then stores the electronic document in the database 13 using an electronic document storage processing unit 28, like that of any one of above-mentioned embodiments 1 to 7. After that, an electronic document stored in the database may become unnecessary, or it may reach an expiry date of an electronic document stored in the database.

When such a status occurs, the electronic document erasing unit 31 erases such an electronic document to which a print-of-a-seal image is added and which is stored in the database 13.

Therefore, the present embodiment offers an advantage of being able to organize electronic documents stored in the database 13 as needed.

### Embodiment 9.

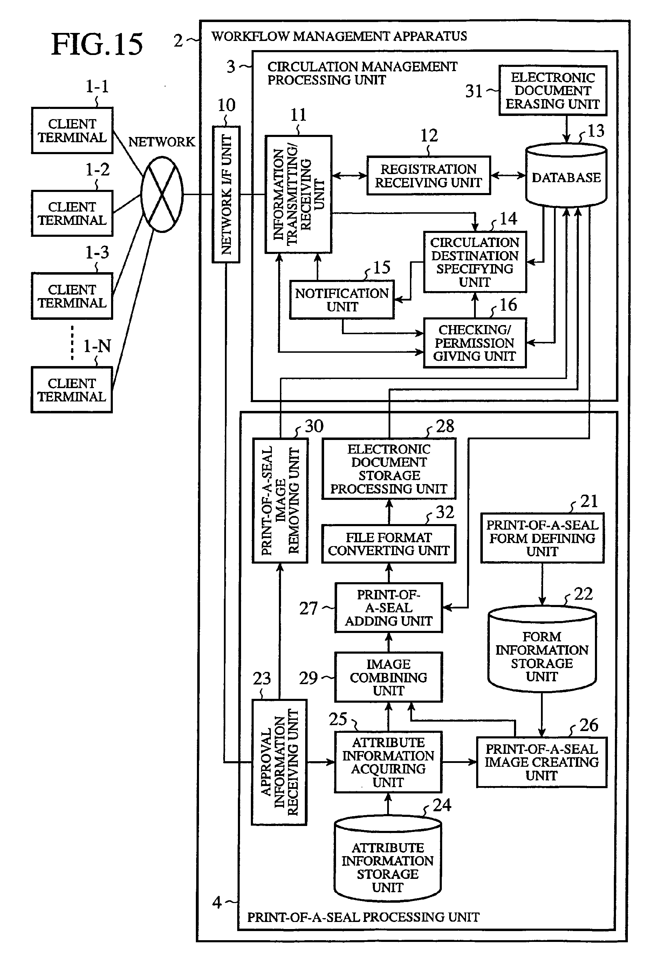

Fig. 15 is a block diagram showing a workflow management apparatus according to embodiment 9 of the present invention. In the figure, the same reference numerals as shown in Fig. 14 denote the same components as those of above-mentioned embodiment 8 or like components, and therefore the explanation of these components will be omitted hereafter.

A file format converting unit 32 is comprised of an information processing apparatus, such as a CPU, and can convert the file format of an electronic document to which a print-of-a-seal image has been added by a print-of-a-seal adding unit 27 into a printable file format. The file-format converting unit 32 constitutes file format converting means. Next, the operation of the workflow management apparatus in accordance with embodiment 9 of the present invention will be explained.

The workflow management apparatus adds a print-of-a-seal image created by a print-of-a-seal image creation unit 26 to a circulating electronic document using the print-of-a-seal adding unit 27, like that of any one of above-mentioned embodiments 1 to 8. A client not only checks a circulating electronic document by using a display of a client terminal which the client uses, but may desire printing of the electronic document.

When a client desires printing of an electronic document, the file format converting unit 32 of the workflow management apparatus 2 converts the file format of the electronic document to which a print-of-a-seal image has been added by the print-of-a-seal adding unit 27 into a printable file format. For example, the file format converting unit 32 converts the file format of the electronic document into a PDF file.

Therefore, the present embodiment offers an advantage of being able to allow any client to operate his or her client terminal so as to print an electronic document.

### Industrial Applicability

As mentioned above, the workflow management apparatus according to the present invention is suitable for, when an electronic document is approved by a circulation destination, adding the print of a seal associated with the circulation destination to the electronic document, while circulating the electronic document to circulation destinations in predetermined order.

## Claims

1. A workflow management apparatus comprising:
a form information registration means for receiving registration of form information specifying a form of a print of a seal and for receiving a change of the form information;
a print-of-a-seal image creating means for creating a print-of-a-seal image according to form information registered into said form information registration means; and
a print-of-a-seal adding means for adding the print-of-a-seal image created by said print-of-a-seal image creating means to a circulating electronic document which has been approved.

2. The workflow management apparatus according to Claim 1, **characterized in that** said apparatus comprises an attribute information acquiring means, responsive to approval of a circulating electronic document from a client terminal, for acquiring attribute information about a person who has approved the circulating electronic document, and said print-of-a-seal image creating means selects form information corresponding to the attribute information acquired by said attribute information acquiring means from all pieces of form information registered into said form information registration means, and creates the print-of-a-seal image according to the selected form information.

3. The workflow management apparatus according to Claim 2, **characterized in that** said print-of-a-seal image creating means forms an attribute image from the attribute information acquired by said attribute information acquiring means, and combines the attribute image with the print-of-a-seal image.

4. The workflow management apparatus according to Claim 2, **characterized in that** said print-of-a-seal image creating means forms a date image from a date on which said workflow management apparatus received the approval of the circulating electronic document from said client terminal, and combines the date image with the print-of-a-seal image.

5. The workflow management apparatus according to Claim 1, **characterized in that** said print-of-a-seal image creating means selects form information corresponding to either an activity concerning the circulating electronic document or a type of the circulating electronic document from all pieces of form information registered in said form information registration means, and creates the print-of-a-seal image according to the selected form information.

6. The workflow management apparatus according to Claim 1, **characterized in that** said print-of-a-seal adding means pinpoints a location where the print-of-a-seal image is to be added to the circulating electronic document with reference to form information about the circulating electronic document.

7. The workflow management apparatus according to Claim 1, **characterized in that** only when an already-defined condition for print-of-a-seal addition is satisfied, said print-of-a-seal adding means adds the print-of-a-seal image to the circulating electronic document.

8. The workflow management apparatus according to Claim 1, **characterized in that** said apparatus comprises a print-of-a-seal image removing means for removing the print-of-a-seal image added to the circulating electronic document when the circulating electronic document to which the print-of-a-seal image has been added by said print-of-a-seal adding means is sent back from another client terminal without receiving approval of the circulating electronic document.

9. The workflow management apparatus according to Claim 1, **characterized in that** said apparatus comprises an electronic document erasing means for erasing the electronic document to which the print-of-a-seal image has been added by said print-of-a-seal adding means.

10. The workflow management apparatus according to Claim 1, **characterized in that** said apparatus comprises a file format converting means for converting a file format of the electronic document to which the print-of-a-seal image has been added by said print-of-a-seal adding means into a printable file format.
